# EUROPEAN PATENT SPECIFICATION

(11) **EP 3 508 382 B1**
(45) Date of publication and mention of the grant of the patent: **16.06.2021**
(21) Application number: 17846092.9
(22) Date of filing: 09.08.2017
(51) Int. Cl.: B60R 1/06, B60R 1/072, B60R 1/02

(54) **VEHICLE SYSTEM**
FAHRZEUGSYSTEM
SYSTÈME DE VÉHICULE

(30) Priority: 01.09.2016 JP 2016170800
(43) Date of publication of application: 10.07.2019
(73) Proprietor: Mitsuba Corporation, Kiryu-shi, Gunma 376-8555 (JP)
(72) Inventor: IZUMI Sumiyasu, Kiryu-shi Gunma 376-8555 (JP); KURIHARA Hitoshi, Kiryu-shi Gunma 3768555 (JP)
(74) Representative: Cabinet Laurent & Charras
(86) International application number: PCT/JP2017/028954
(87) International publication number: WO 2018/043083

(56) References cited:
- DE-A1- 3 828 221
- DE-A1-102010 013 235
- DE-U1- 29 621 666
- JP-A- H07 251 677
- JP-A- H08 241 499
- JP-A- 2009 116 723
- JP-A- 2014 125 175
- US-A1- 2004 156 129

## Description

### TECHNICAL FIELD

The present invention relates to a vehicle system.

### BACKGROUND

In the related art, in order to reduce a blind spot of a driver who drives a vehicle, a door mirror is attached to an upper portion or the like of a front door of the vehicle, and thereby, a region on the side of the vehicle is able to be reflected therein (refer to Patent Document 1). In addition, the driver is able to check an angular range of the blind spot in a side region with a mirror by turning the entire side mirror outward with respect to the subject vehicle. Therefore, the driver can improve visibility to the rear and of a following vehicle. Other solutions are also described in documents DE 296 21 666 U1 and US 2004/156129 A1.

### [Related Art Documents]

### [Patent Documents]

[Patent Document 1] Japanese Unexamined Patent Application, First Publication No. 2010-18232

### SUMMARY OF INVENTION

### PROBLEMS TO BE SOLVED BY THE INVENTION

However, in a case where the entire side mirror is turned to the outside with respect to the subject vehicle, a side surface of the subject vehicle is not reflected on the side mirror. As a result, it is difficult for the driver to grasp a position of the following vehicle with respect to the subject vehicle during traveling, and there is a possibility that an operation such as a lane change is not able to be performed safely.

The present invention has been made in view of such a circumstance, and an object of the present invention is to provide a vehicle system capable of grasping a position of a following vehicle with respect to a subject vehicle while securing visibility to the rear and of the following vehicle.

### MEANS FOR SOLVING THE PROBLEM

According to the present invention, a vehicle system includes: a mirror having flexibility and provided in a subject vehicle; an output unit configured to output a control instruction signal instructing to control the mirror in a case where approach of a following vehicle with respect to the subject vehicle is detected; and a curvature variable device configured to change a radius of curvature of the mirror in a case where the control instruction signal is output.

According to an aspect of the present invention, in the above-described vehicle system, in a case where the control instruction signal is output, the curvature variable device changes the radius of curvature of a region outside a vehicle width direction center of the subject vehicle in the mirror.

The curvature variable device may change the radius of curvature of the mirror variable in response to a relative speed of the following vehicle with respect to the subject vehicle.

According to the present invention, in a case where the control instruction signal is output, the curvature variable device changes the radius of curvature of the mirror to a predetermined value and adjusts a speed at which the radius of curvature of the mirror is changed to the predetermined value in accordance with a relative speed of the following vehicle with respect to the subject vehicle.

According to an aspect of the present invention, the above-described vehicle system further includes: a following vehicle detection unit configured to detect the following vehicle that is present at a rear side position of the subject vehicle; and a relative speed determination unit configured to determine whether or not a relative speed of the following vehicle with respect to the subject vehicle is equal to or greater than a speed threshold value. In the above-described vehicle system, in a case where the following vehicle is detected and the relative speed is equal to or higher than the speed threshold value, the output unit outputs the control instruction signal.

According to an aspect of the present invention, in the above-described vehicle system, in a case where the following vehicle is detected and a steering of the subject vehicle is rotated at a predetermined angle or more, the output unit outputs the control instruction signal.

According to an aspect of the present invention, in the above-described vehicle system, in a case where the following vehicle is detected and a direction indicator of the subject vehicle is operated, the output unit outputs the control instruction signal.

According to an aspect of the present invention, the above-described vehicle system further includes a timer configured to start time measurement in a case where the output of the control instruction signal from the output unit is stopped. In the above-described vehicle system, the curvature variable device returns the radius of curvature of the mirror to an original radius of curvature of the mirror after the timer measures a set time.

According to an aspect of the present invention, the above-described vehicle system further includes a timer configured to start time measurement in a case where the control instruction signal is output from the output unit. In the above-described vehicle system, in a case where the control instruction signal is not output after the timer measures a set time, the curvature variable device returns the radius of curvature of the mirror to an original radius of curvature of the mirror.

### ADVANTAGE OF THE INVENTION

As described above, according to the present invention, it is possible to grasp a position of a following vehicle with respect to a subject vehicle while securing visibility to the rear and of the following vehicle.

### BRIEF DESCRIPTION OF THE DRAWINGS

Fig. 1 is a diagram showing an example of a schematic constitution of a vehicle 100 on which a vehicle system 1 according to the present embodiment is mounted.
Fig. 2 is a diagram showing an example of a schematic constitution diagram of the vehicle system 1 according to the present embodiment.
Fig. 3 is a perspective view of a door mirror device 2 attached to a front seat left side of a vehicle body 101 according to the present embodiment.
Fig. 4 is an exploded perspective view of the door mirror device 2 according to the present embodiment.
Fig. 5 is a plan view of the door mirror device 2 according to the present embodiment.
Fig. 6 is a partially enlarged cross-sectional view of a mirror main body 15 according to the present embodiment.
Fig. 7 is a plan view of the mirror main body 15 as viewed from the front according to the present embodiment.
Fig. 8 is a plan view of a mirror holder 16 as viewed from the front according to the present embodiment.
Fig. 9 is a cross-sectional view taken along a line A-A of Fig. 5.
Fig. 10A is a diagram showing a state of a mirror 6 in a case where a curvature variable device 20 does not change a radius of curvature of the mirror 6 according to the present embodiment.
Fig. 10B is a diagram showing a state of the mirror 6 in a case where the curvature variable device 20 changes the radius of curvature of the mirror 6 according to the present embodiment.
Fig. 11A is a diagram showing a case where the mirror 6 is flat according to the present embodiment and is a diagram showing a cross-sectional view of the mirror 6.
Fig. 11B is a diagram showing a mirror image reflected on the mirror 6 in the state of Fig. 11A.
Fig. 12A is a diagram showing a case where a vehicle width direction outer side of the mirror 6 is bent and deformed according to the present embodiment and is a diagram showing a cross-sectional view of the mirror 6.
Fig. 12B is a diagram showing the mirror image reflected on the mirror 6 in the state of Fig. 12A.
Fig. 13 is a diagram for explaining a flow of a control method of the vehicle system 1 according to the present embodiment.
Fig. 14 is a diagram showing a first modified example of the vehicle system 1 according to the present embodiment.
Fig. 15 is a diagram showing a second modified example of the vehicle system 1 according to the present embodiment.

### DESCRIPTION OF THE EMBODIMENTS

Hereinafter, the present disclosure will describe embodiments hereof, but the following embodiment should not be considered to be limiting upon the claims. In addition, all combinations of features described in the embodiment are not necessarily indispensable to solving means of the invention. Note that, in the drawings, the same or similar parts are denoted by the same reference numerals, and redundant description may be omitted.

Hereinafter, a vehicle system of the embodiment will be described with reference to the drawings.

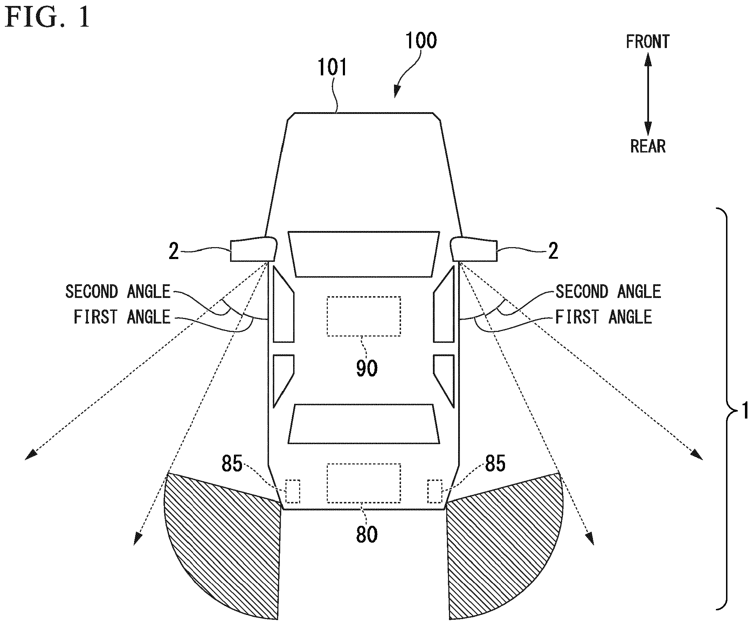

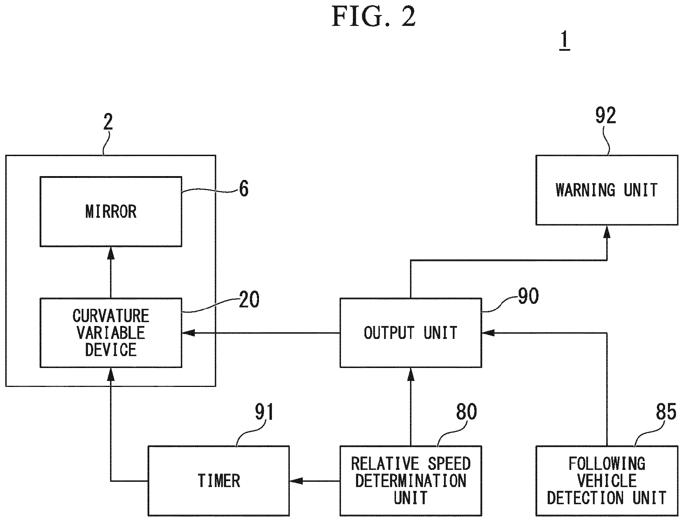

Fig. 1 is a diagram showing an example of a schematic constitution of a vehicle 100 on which a vehicle system 1 according to the present embodiment is mounted. Fig. 2 is a diagram showing an example of a schematic constitution diagram of the vehicle system 1 according to the present embodiment. Note that, although a case where the vehicle 100 is a car will be described in the present embodiment, the present invention is not limited thereto, and for example, the vehicle system 1 is also able to be applied to a motorcycle.

As shown in Figs. 1 and 2, the vehicle system 1 includes a door mirror device 2, a relative speed determination unit 80, a following vehicle detection unit 85, an output unit 90, a timer 91, and a warning unit 92.

The door mirror device 2 is attached to an upper portion or the like of a front door of the vehicle 100.

The door mirror device 2 includes a mirror 6 and a curvature variable device 20. The door mirror device 2 is disposed so that the mirror 6 reflects a range of a predetermined angle on the rear side of the vehicle 100 as seen from a driver's seat side of the vehicle 100. Specifically, in a normal state, the mirror 6 of the door mirror device 2 reflects a range of a first angle on the rear side of the vehicle 100 as seen from the driver's seat side of the vehicle 100. The range of the first angle is a range of an angle up to, for example, 30 degrees with respect to the rear of the vehicle 100 as a reference. On the other hand, a range of a second angle is a range of an angle up to, for example, 30 degrees with respect to the first angle as a reference, and is a range of a blind spot of the door mirror device 2 in the normal state. The normal state indicates a state of the vehicle 100 that is not affected by a following vehicle traveling in the range of the second angle. For example, the normal state is a case where the following vehicle is not approaching the vehicle 100 or a case where the vehicle 100 does not change a lane.

On the other hand, in a case where the vehicle 100 is not in the normal state, the curvature variable device 20 implements curvature control for changing a radius of curvature of the mirror 6. Therefore, the mirror 6 of the door mirror device 2 reflects the range of the first angle and the second angle on the rear side of the vehicle 100 as seen from the driver's seat side of the vehicle 100.

As described above, in a case where the vehicle 100 is in the normal state, the mirror 6 reflects the range of the first angle on the rear side of the vehicle 100. On the other hand, in a case where the vehicle 100 is not in the normal state, the radius of curvature of the mirror 6 is changed by the curvature variable device 20, and thus the mirror 6 reflects the range of the first angle and the second angle that was the blind spot of the rear side of the vehicle 100. A case where the vehicle 100 is not in the normal state corresponds to, for example, a case where the following vehicle is approaching the vehicle 100 or a case where the vehicle 100 changes the lane.

Hereinafter, the case where the vehicle 100 is not in the normal state may be referred to as a wide angle state in some cases.

The relative speed determination unit 80 determines whether or not a relative speed of the following vehicle with respect to the vehicle 100 is equal to or greater than a speed threshold value (set value). In a case where the relative speed of the following vehicle with respect to the vehicle 100 is equal to or greater than the set value, the relative speed determination unit 80 outputs a speed excess signal indicating a determination result to the output unit 90. Note that, in the present embodiment, a method of acquiring the relative speed of the following vehicle with respect to the vehicle 100 is not particularly limited. For example, the relative speed of the following vehicle with respect to the vehicle 100 may be calculated, on the basis of an image of the following vehicle captured by a camera mounted on the vehicle 100. In addition, the relative speed may be calculated using a known technology.

The following vehicle detection unit 85 is attached to the rear of the vehicle 100, and detects the following vehicle that is present on the rear side of the vehicle 100. For example, the following vehicle detection unit 85 detects the following vehicle that is present on the rear side by using a millimeter wave radar. However, the following vehicle detection unit 85 only needs to be able to detect the following vehicle that is present on the rear side of the vehicle 100, and a detection method is not particularly limited. For example, the following vehicle detection unit 85 may detect the following vehicle that is present on the rear side of the vehicle 100, by using a blind spot detection (BSD) system or a lane change alert (LCA) system that detects the following vehicle using the millimeter wave radar, a rear cross traffic alert (RCTA), or the like. In addition, the following vehicle detection unit 85 may detect the following vehicle that is present on the rear side of the vehicle 100 by a camera mounted on the rear of the vehicle 100. The following vehicle that is present on the rear side is, for example, the following vehicle that is present at the second angle in left and right adjacent lanes. That is, for example, the following vehicle detection unit 85 detects a vehicle that is present in the range of the second angle (or entering the range of the second angle) on left and right sides that are the blind spot of the door mirror device 2. In a case where the following vehicle detection unit 85 detects the following vehicle that is present on the rear side of the vehicle 100, the following vehicle detection unit 85 outputs a following vehicle presence signal indicating that the following vehicle is detected to the output unit 90. Note that, in consideration of safety, the following vehicle detection unit 85 may detect the following vehicle that is present at the first angle in the left and right adjacent lanes and may output a following vehicle presence signal indicating that the following vehicle is detected to the output unit 90. That is, the following vehicle detection unit 85 may detect the following vehicle before the following vehicle enters the blind spot of the door mirror device 2 and may output the following vehicle presence signal indicating that the following vehicle is detected to the output unit 90.

In a case where at least one of the approach of the following vehicle with respect to the vehicle 100 and the execution of the lane change of the vehicle 100 is detected, the output unit 90 outputs a control instruction signal instructing to control the mirror 6 to the curvature variable device 20. For example, in a case where the following vehicle is detected by the following vehicle detection unit 85 and the it is determined that the relative speed is equal to or greater than the speed threshold value by the relative speed determination unit 80, the output unit 90 detects the approach of the following vehicle with respect to the vehicle 100. That is, in a case where the output unit 90 acquires the following vehicle presence signal from the following vehicle detection unit 85 and acquires the speed excess signal from the relative speed determination unit 80, the output unit 90 determines that the following vehicle has approached the vehicle 100. In addition, in a case where the output unit 90 determines that the following vehicle has approached the vehicle 100, the output unit 90 outputs the control instruction signal to the curvature variable device 20 and the warning unit 92.

In a case where it is determined that the relative speed of the following vehicle with respect to the vehicle 100 is less than the set value by the relative speed determination unit 80 after the curvature control of the mirror 6 is performed, the timer 91 starts time measurement. In a case where the timer 91 measures a set time, the timer 91 outputs a time measurement end signal indicating that the time measurement of the set time is ended to the curvature variable device 20.

In a case where the control instruction signal is output, the warning unit 92 warns a driver that the following vehicle has approached the vehicle 100. The case where the control instruction signal is output is a case where the output unit 90 determines that the following vehicle has approached the vehicle 100. For example, the warning unit 92 may issue a warning by displaying the warning on a display unit, or may issue a warning by outputting sound. In addition, the warning unit 92 may warn the driver that the following vehicle has approached the vehicle 100 by vibrating a steering.

### (Constitution of door mirror device 2)

Hereinafter, the constitution of the door mirror device 2 will be specifically described.

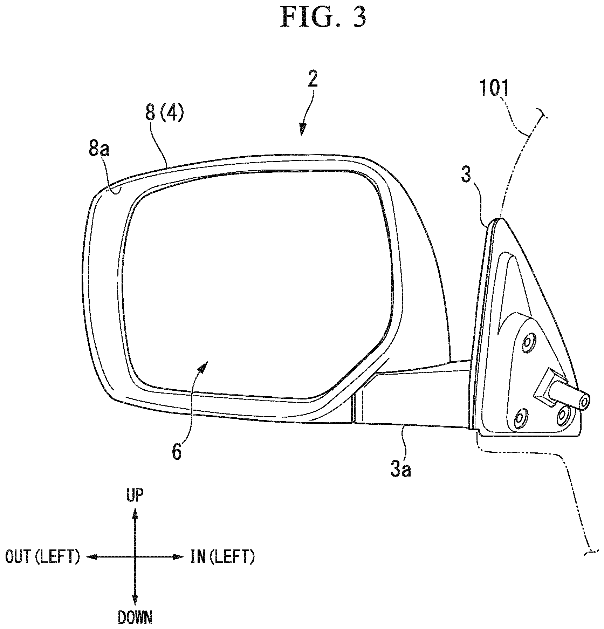

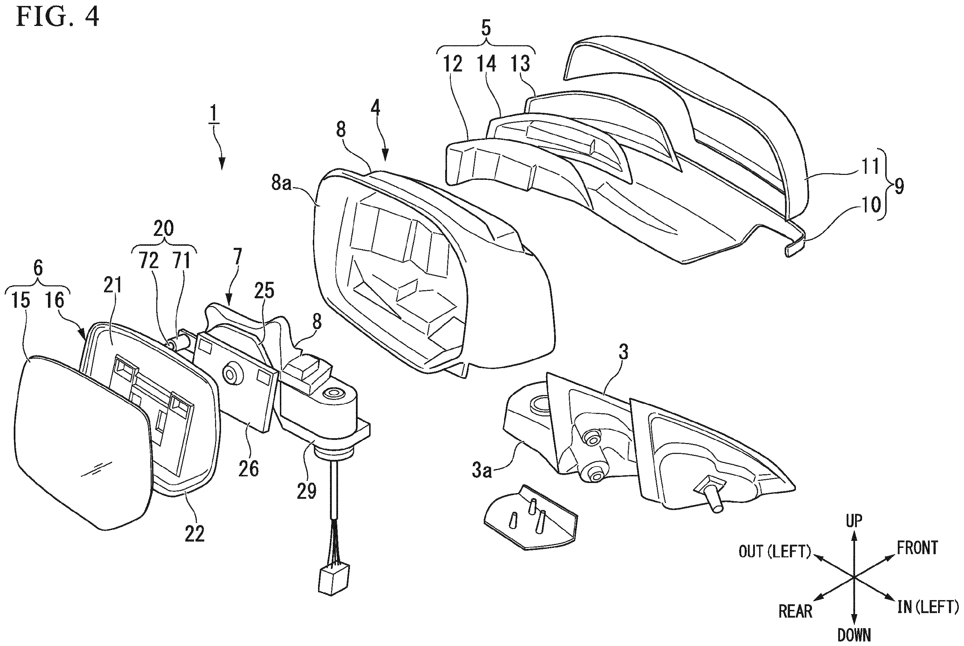

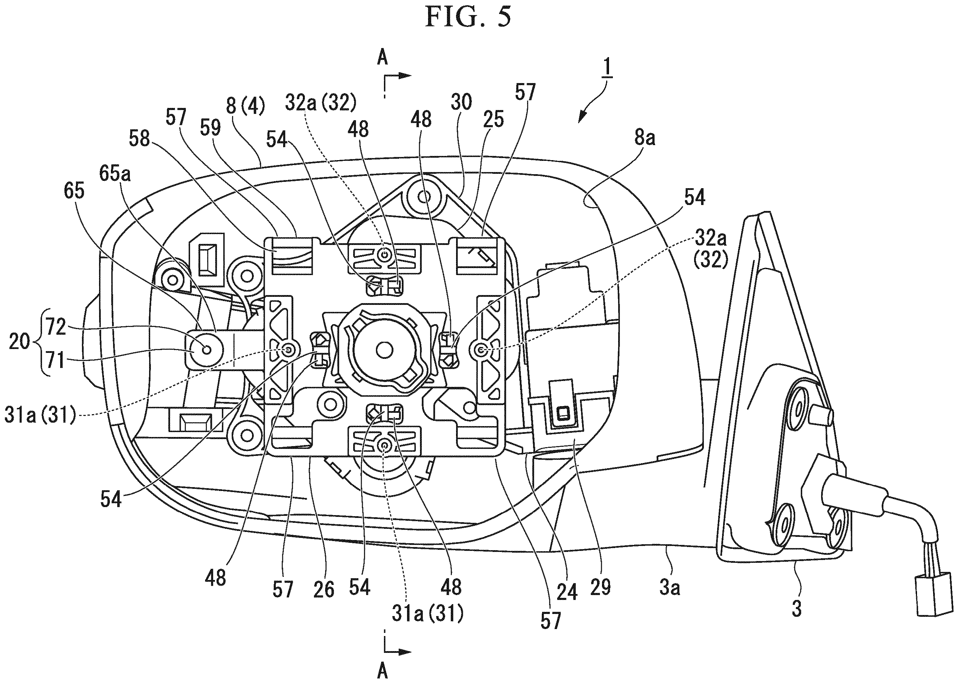

Fig. 3 is a perspective view of the door mirror device 2 attached to a front seat left side of a vehicle body 101, Fig. 4 is an exploded perspective view of the door mirror device 2, and Fig. 5 is a plan view of the door mirror device 2 and shows a state in which the mirror 6 is removed.

Note that, in the following description, unless otherwise noted, forward and rearward directions coincide with forward and rearward directions of the vehicle body 101, and a horizontal direction coincides with a horizontal direction when an occupant is facing the front. In addition, in the following description, in order to make the description easy to understand, there is a case where upward in a vertical direction is simply referred to as upward and a downward in a vertical direction is simply referred to as downward, or the like.

As shown in Figs. 3 to 5, the door mirror device 2 is installed so that the door mirror device 2 is able to perform open and close driving in a vehicle width direction with respect to an arm portion 3a of a door mirror stay 3 fixed to the front seat left side (for example, a door) of the vehicle body 101. In addition, the door mirror device 2 is able to be rotated in a direction (closing direction) approaching the vehicle body 101 to store the door mirror device 2, or is able to be rotated in a direction (opening direction) away from the vehicle body 101 so as to be in a use state in which the door mirror device 2 is able to recognize the rear, by operating a switch in the vicinity of the driver's seat in a vehicle interior (not shown). In addition, the door mirror device 2 is able to be rotated in a direction (closing direction) approaching the vehicle body 101 to store the door mirror device 2, or is able to be rotated in a direction (opening direction) away from the vehicle body 101 so as to be in a use state in which the door mirror device 2 is able to recognize the rear, by operating a portable remote control switch (not shown).

Note that the door mirror device 2 is also fixed to a front seat right side of the vehicle body 101, but the constitution thereof is the same as the door mirror device 2 that is formed line-symmetrically with the door mirror device 2 fixed to the front seat left side. Therefore, in the following description, the description of a case where the door mirror device 2 is provided on the front seat right side is omitted.

The door mirror device 2 includes a mirror housing 4, a turn lamp portion 5, the mirror 6, a drive unit 7, and the curvature variable device 20.

The mirror housing 4 has a cup shape in which the rear is open.

The turn lamp portion 5 is provided on a front surface side of the mirror housing 4.

The mirror 6 is provided on an opening side (rear side) of the mirror housing 4.

The drive unit 7 is provided in the mirror housing 4 and supports the mirror 6.

The curvature variable device 20 is provided in the mirror housing 4 and bends and deforms the mirror 6.

### (Mirror housing)

The mirror housing 4 includes a housing main body 8 and a cover 9.

The housing main body 8 is formed of resin or the like and has a cup shape in which an opening 8a is formed on the rear side.

The cover 9 is attached to a front surface side of the housing main body 8. The cover 9 constitutes an exterior design of the door mirror device 2 and is constituted by a lower cover (cover housing) 10 and an upper cover (skull cap) 11 which are able to be separated in a vertical direction.

### (Turn lamp portion)

The turn lamp portion 5 irradiates light to an oncoming car, a following car, or the like, and secures a legal direction indication function. The turn lamp portion 5 is provided on a front surface of the mirror housing 4, extending from substantially a center in the vehicle width direction to an outer end portion.

The turn lamp portion 5 includes an outer housing 12, an outer lens 13, and an inner housing 14.

The outer housing 12 is received in the mirror housing 4.

The outer lens 13 abuts the outer housing 12 from the front and is integrated with the outer housing 12.

The inner housing 14 is provided between the outer housing 12 and the outer lens 13. In addition, the inner housing 14 is provided with a light emitting unit (not shown) including a light emitting diode (LED) or the like.

### (Mirror)

The mirror 6 includes a mirror main body 15 and a mirror holder 16.

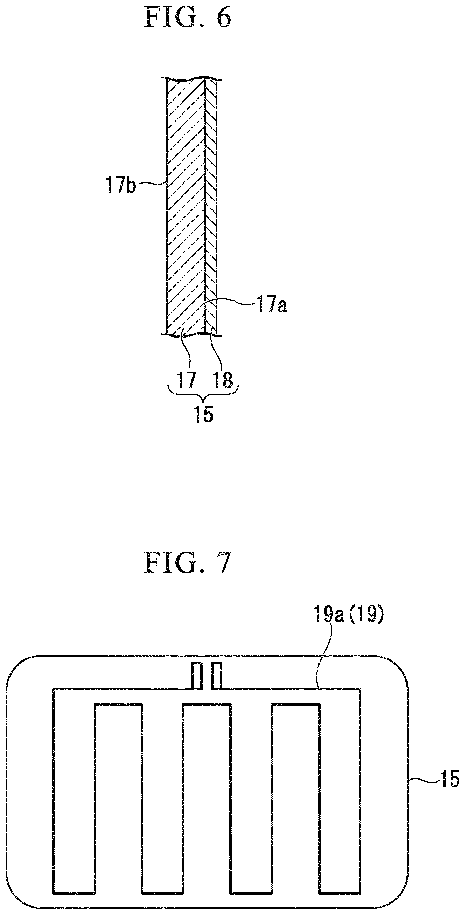

Fig. 6 is a partially enlarged cross-sectional view of the mirror main body 15, and Fig. 7 is a plan view of the mirror main body 15 as viewed from the front.

As shown in Figs. 6 and 7, in the mirror main body 15, a thin film 18 is attached to a back surface 17a of a tempered glass 17. The tempered glass 17 has flexibility. Specifically, as the tempered glass 17, "Dragontrail" (Dragontrail is a registered trademark of Asahi Glass Co., Ltd.) available from Asahi Glass Co., Ltd. is used. A surface 17b of the tempered glass 17 is mirror-finished.

The thin film 18 is a film that is non-transmissive and has low reflectance of visible light. A mirror image is reflected on the surface 17b (the surface of the mirror main body 15) of the tempered glass 17 by attaching the thin film 18 to the back surface 17a of the tempered glass 17.

In addition, a heater 19 is provided on the back surface (the surface on a side of the thin film 18) of the mirror main body 15.

The heater 19 is formed by drawing a hot wire 19a around the entire mirror main body 15 in a well-balanced manner. Therefore, for example, when the mirror main body 15 becomes foggy, the mirror main body 15 is able to be heated by the heater 19, and fogging of the entire mirror main body 15 is able to be removed.

Here, since the mirror main body 15 uses the tempered glass 17, it is possible to prevent damage of the mirror main body 15 due to external force or the like even in a case where a thickness of the glass is set to be thin. Therefore, the thickness of the mirror main body 15 is set to be thinner than that of a mirror of the related art (a mirror manufactured using an ordinary glass). As a result, the heat generated from the hot wire 19a is able to be efficiently transferred to the entire mirror main body 15.

Therefore, a density of the hot wire 19a with respect to the mirror main body 15 is lower than that in a case where the hot wire 19a is drawn around the mirror of the related art. In other words, the hot wire 19a is sparsely drawn around the mirror main body 15. Even though the hot wire 19a is sparsely drawn around the mirror main body 15, the entire mirror main body 15 is able to be sufficiently heated.

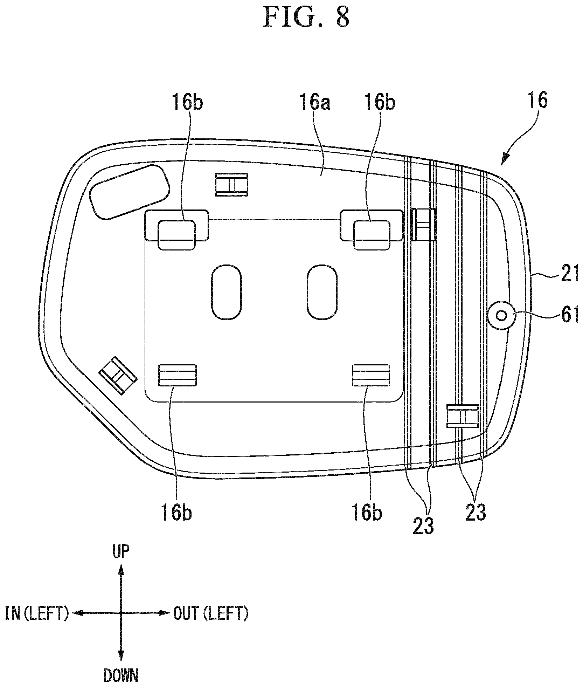

Fig. 8 is a plan view of the mirror holder 16 as viewed from the front.

As shown in Figs. 4 and 8, in the mirror holder 16, a base portion 21 formed so as to correspond to an outer shape of the mirror main body 15, and a fitting portion 22 rising formed on an outer peripheral edge of the base portion 21 are integrally molded. In addition, the mirror main body 15 and the mirror holder 16 are integrated by fitting the mirror main body 15 into the fitting portion 22.

Note that the mirror main body 15 and the mirror holder 16 may be integrated by merely fitting the mirror main body 15 into the mirror holder 16. In addition, the mirror main body 15 may be bonded to the mirror holder 16 using an adhesive, and the mirror main body 15 and the mirror holder 16 may be integrated. In a case where the mirror main body 15 is adhesively fixed to the mirror holder 16, the fitting portion 22 may not be formed in the mirror holder 16.

Here, the mirror holder 16 is formed of resin. Although details will be described later, since the mirror holder 16 of the present embodiment is bent and deformed, a material of the resin may be soft. In addition, a fitting force or adhesion force of the mirror main body 15 to the mirror holder 16 is set to such a strength that the mirror main body 15 does not peel off from the mirror holder 16 when the mirror holder 16 is bent and deformed. Furthermore, although not shown, a nail portion or the like may be provided on the mirror holder 16 so that the mirror main body 15 does not peel off from the mirror holder 16.

In addition, a plurality of grooves 23 are formed along the vertical direction outside the vehicle width direction center (the right side in Fig. 8), on a front surface 16a of the mirror holder 16. A shape of the groove 23 is able to be set to various shapes such as a V groove shape and a U groove shape. In a portion where the groove 23 is formed, a rigidity of the mirror holder 16 is weakened. Therefore, a portion corresponding to the groove 23 of the mirror holder 16 is able to be flexed in the forward and rearward directions along the groove 23.

Furthermore, a connecting portion 61 is provided at substantially the center in the vertical direction and on the vehicle width direction outermost side, on the front surface 16a of the mirror holder 16. That is, the connecting portion 61 is disposed outside the groove 23 in the vehicle width direction. A distal end of an operation shaft 72 of the curvature variable device 20, which will be described later, is connected to the connecting portion 61 so as to be able to be rotated.

In addition, an engagement claw 16b that is able to be engaged with a mirror engagement portion 57 of a pivot plate 26 that will be described later is provided in the vehicle width direction center side of the groove 23, on the front surface 16a of the mirror holder 16. The drive unit 7 and the mirror 6 are integrated by engaging the engagement claw 16b and the mirror engagement portion 57.

### (Drive unit)

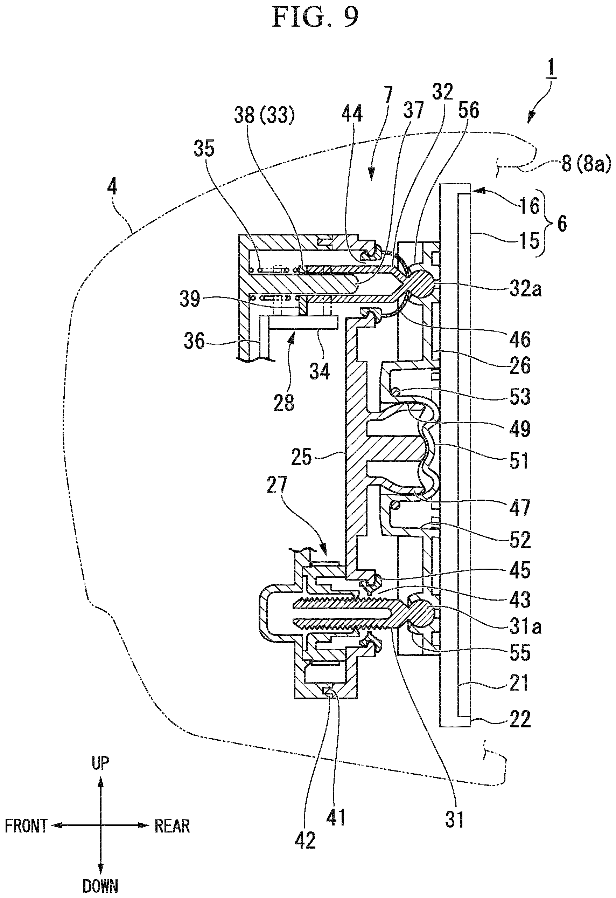

Fig. 9 is a cross-sectional view taken along a line A-A of Fig. 5.

As shown in Figs. 4, 5, and 9, the drive unit 7 supports the mirror 6 and tilts the mirror 6.

The drive unit 7 includes a bracket 24, a holder 25, the pivot plate 26, a mirror tilt drive unit 27, an angle detection unit 28, and the like.

The bracket 24 is attached to the arm portion 3a of the door mirror stay 3 so as to be able to be rotated.

The holder 25 is attached to the bracket 24.

The pivot plate 26 is attached to the holder 25 so as to be able to be tilted.

The mirror tilting drive unit 27 and the angle detection unit 28 are received in a receiving space formed between the bracket 24 and the holder 25. All of the bracket 24, the holder 25, and the pivot plate 26 are formed of resin.

The bracket 24 includes a storage drive case 29 and a bracket main body portion 30 that is protruded to the outer side in the vehicle width direction from the storage drive case 29 to be formed. In addition, the storage drive case 29 and the bracket main body portion 30 are integrally formed. A shaft (not shown) fixed to the arm portion 3a in an upright attitude is inserted into the storage drive case 29 from a bottom portion of the storage drive case 29. The shaft is connected to a storage drive motor (not shown) fixed in the storage drive case 29 through a gear (not shown).

Since the shaft is fixed, in a case where the storage drive motor is rotated, the storage drive motor revolves around the shaft. Therefore, the bracket 24 fixing the storage drive motor rotates around the shaft. In addition, as a result, the mirror housing 4 fixed to the bracket 24 rotates around the shaft.

The bracket main body portion 30 is formed in a substantially plate shape and becomes a substantially vertical posture when the door mirror device 2 is installed in the door of the vehicle. The mirror tilt drive unit 27 received in the bracket main body portion 30 includes two operation shafts 31. The two operation shafts 31 move back and forth along the forward and rearward directions by a motor (not shown) or a worm speed reduction mechanism. A head portion 31a of a spherical shape is integrally formed at distal ends of each of the operation shafts 31. The head portion 31a is connected to the pivot plate 26.

The two operation shafts 31 constituted as described above move back and forth, and thus the mirror 6 is tilted through the pivot plate 26. Specifically, one of the two operation shafts 31 is disposed on a lower side of the bracket main body portion 30, and tilts the mirror 6 in the vertical direction (hereinafter, the operation shaft 31 tilting the mirror 6 as described above is referred to as a vertical tilting operation shaft 31). In addition, the other one of the two operation shafts 31 is disposed outside the bracket main body portion 30 in the vehicle width direction (left side in Fig. 4) and tilts the mirror 6 in the right and left direction (hereinafter, the operation shaft 31 tilting the mirror 6 as described above is referred to as a horizontal tilting operation shaft 31).

As shown in Fig. 9 in detail, the angle detection unit 28 detects a tilt angle of the vertical direction of the mirror 6 and detects a tilt angle of the horizontal direction.

The angle detection unit 28 includes two detection rods 32, contact members 33 attached respectively corresponding to the detection rods 32, variable resistors 34 provided respectively corresponding to the contact members 33, springs 35 attached respectively corresponding to the detection rods 32, a substrate 36, and a guide rod 37 to which the detection rods 32, the contact members 33, and the springs 35 are attached. The variable resistor 34 is electrically connected to the substrate 36.

In addition, one of two guide rods 37 is disposed on an upper side of the bracket main body portion 30 so as to oppose the vertical tilting operation shaft 31 in the vertical direction. The detection rod 32, the contact member 33, and the spring 35 attached to the guide rod 37 disposed as described above, and the variable resistor 34 corresponding to the contact member 33 are used for detection of a vertical tilt of the mirror 6.

In addition, the other of the two guide rods 37 is disposed inside the bracket main body portion 30 in the vehicle width direction (right side in Fig. 5) so as to oppose the horizontal tilting operation shaft 31 in the horizontal direction. The detection rod 32, the contact member 33, and the spring 35 attached to the guide rod 37 disposed described above, and the variable resistor 34 corresponding to the contact member 33 are used for detection of a horizontal tilt of the mirror 6.

Each part will be described in more detail.

The detection rod 32 has a hollow tubular shape in which a distal end side is closed, and the guide rod 37 is inserted into the hollow portion thereof so as to be able to slide. Therefore, the detection rod 32 is supported on the guide rod 37 so as to be movable along an axis thereof. Note that a head portion 32a of a spherical shape is formed at a distal end of the detection rod 32.

In addition, the contact member 33 is attached to the guide rod 37 so as to be able to slide, on the guide rod 37 on a front side of the detection rod 32. The contact member 33 includes a ring portion 38 through which the guide rod 37 is inserted and a contact point 39 protruded to an outer side in a radius direction from the ring portion 38. The contact member 33 is constituted so that the contact point 39 is in contact with the variable resistor 34 and slides on the variable resistor 34. In addition, the contact member 33 is pressed against a front end of the detection rod 32 by the spring 35 disposed outside the guide rod 37. Therefore, the contact member 33 moves in an axial direction of the guide rod 37 following the detection rod 32.

In a case where the contact member 33 moves in the axial direction of the guide rod 37, the contact point 39 slides along a longitudinal direction of the variable resistor 34, and a resistance value of the variable resistor 34 changes. In this angle detection unit 28, a tilt angle of the pivot plate 26 (in other words, the tilt angle of the mirror 6) is grasped as an axial displacement of the detection rod 32, and the axial displacement of the detection rod 32 is detected as a resistance value change of the variable resistor 34. In other words, the angle detection unit 28 calculates the tilt angle of the mirror 6 on the basis of the resistance value of the variable resistor 34.

A fitting portion 41 is formed on an outer peripheral portion of the holder 25 receiving the mirror tilt drive unit 27 and the angle detection unit 28 between the mirror tilt drive unit 27 and the angle detection unit 28, and the bracket 24. The fitting portion 41 is fitted to a fitting portion 42 formed on the bracket 24. Therefore, a receiving portion that receives the mirror tilt drive unit 27 and the angle detection unit 28 is formed by the bracket 24 and the holder 25.

In addition, a hole 43 through which the operation shaft 31 is inserted is formed in the holder 25 at a position corresponding to the operation shaft 31 and the detection rod 32. In addition, a hole 44 through which the detection rod 32 is inserted is formed in the holder 25. In addition, a distal end of the operation shaft 31 protrudes from the holder 25 through the hole 43. In addition, the distal end of the detection rod 32 protrudes from the holder 25 through the hole 44. Furthermore, a grommet 45 is mounted between the hole 43 and the operation shaft 31, and a grommet 46 is mounted between the hole 44 and the detection rod 32. It is possible to prevent entry of dust into the inside due to the grommets 45 and 46.

Furthermore, a pivot shaft 47 of which an outer surface is formed by part of a spherical surface is integrally provided at a substantially center of a rear surface of the holder 25. In addition, four locking protrusions 48 that are protruded rearward and have a substantially U shape are formed around the pivot shaft 47, on the rear surface of the holder 25. The locking protrusions 48 are disposed at intervals of 90 degrees around the pivot shaft 47. In addition, the pivot plate 26 is engaged with the pivot shaft 47, the locking protrusion 48, the operation shaft 31, and the detection rod 32, so as to be able to be tilted.

As shown in Fig. 5 in detail, the pivot plate 26 connects the mirror 6 and the drive unit 7 to each other (supports the mirror 6) and is formed in a substantially rectangular shape in a plan view.

In addition, mirror engagement portions 57 are provided at four corners of the pivot plate 26, respectively. The mirror engagement portion 57 is constituted by a square hole 58 of a rectangular shape in a plan view and a pin 59 straddling the square hole 58 in the horizontal direction. In addition, a rear surface of the pivot plate 26 and the mirror holder 16 are overlapped, the mirror engagement portion 57 and the engagement claw 16b (refer to Fig. 8) of the mirror holder 16 are engaged with each other, and thus the mirror 6 is supported on the pivot plate 26. That is, the pivot plate 26 and the mirror 6 are integrated.

Here, the engagement claw 16b provided in the mirror holder 16 is disposed on a center side with respect to the groove 23 (refer to Fig. 8). That is, an area of the rear surface overlapped with the mirror holder 16 of the pivot plate 26 is set to be sufficiently smaller than an area of the mirror holder 16. In addition, the mirror 6 is supported by the pivot plate 26 at a position avoiding the groove 23 of the mirror holder 16, that is, at a center portion of the mirror 6.

On the other hand, a pivot recess portion 49 capable of press-fitting the pivot shaft 47 is integrally formed at a position corresponding to the pivot shaft 47, on the front surface of the pivot plate 26. An inner surface of the pivot recess portion 49 is formed by part of a spherical surface. In addition, in a state in which the pivot shaft 47 is press-fitted into the pivot recess portion 49, the pivot plate 26 is able to swing with the pivot shaft 47 as a swing fulcrum.

In addition, a spring receiving recess portion 52 of a substantially rectangular shape in a plan view is formed around a projection portion 51 that is a portion corresponding to the pivot recess portion 49, on the rear surface of the pivot plate 26. A C-shaped snap ring 53 engaged with a root portion of the projection portion 51 is received in the spring receiving recess portion 52. The C-shaped snap ring 53 clamps the root portion of the projection portion 51 to prevent the root portion from expanding a diameter thereof. Therefore, the pivot shaft 47 is prevented from being detached from the pivot recess portion 49.

In addition, rotation restriction pins 54 are provided outside the spring receiving recess portion 52, that is, at positions corresponding to the locking protrusions 48 of the holder 25, respectively, on the pivot plate 26. The locking protrusions 48 are engaged with the rotation restriction pins 54. This prevents the holder 25 and the pivot plate 26 from rotating relative to each other around a front and rear axis passing through a center of the pivot shaft 47.

Furthermore, spherical receiving seats 55 and 56 are integrally formed at positions corresponding to the operation shaft 31 and the detection rod 32, respectively, on the front surface of the pivot plate 26. The head portion 31a of the operation shaft 31 is fitted into the spherical receiving seat 55 on a side of the operation shaft 31. On the other hand, the head portion 32a of the detection rod 32 is fitted into the spherical receiving seat 56 on a side of the detection rod 32. Therefore, the operation shaft 31, the detection rod 32, and the pivot plate 26 are integrally connected to each other while allowing the head portions 31a and 32a and the spherical receiving seats 55 and 56 to slide. Note that the head portion 31a of the operation shaft 31 and the spherical receiving seat 55 are fitted to each other so as to be relatively non-rotatable around the axis of the operation shaft 31.

Here, a curvature variable device bracket 65 is integrally formed on a vehicle width direction outer edge of the pivot plate 26. The curvature variable device 20 is fixed to the curvature variable device bracket 65.

### (Curvature variable device)

In a case where the curvature variable device 20 acquires the control instruction signal output from the output unit 90, the curvature variable device 20 performs curvature control for changing the radius of curvature of the mirror 6 by bending and deforming the mirror 6. For example, in a case where the control instruction signal is output from the output unit 90, the curvature variable device 20 changes the radius of curvature of the region outside the center of the vehicle 100 in the vehicle width direction in the mirror 6.

In a case where the timer 91 measures the set time after the curvature control is implemented, the curvature variable device 20 returns the radius of curvature of the mirror 6 to the original. That is, in a case where the curvature variable device 20 acquires the time measurement end signal from the timer 91, the curvature variable device 20 returns the mirror 6 to a flat state. This timer 91 prevents repeatedly controlling the curvature of the mirror 6 (chattering) in a short time in a case where a plurality of following vehicles are approaching in a chained state in the lane next to the vehicle 100. That is, the timer 91 arbitrarily sets a hysteresis for determining the approach of the following vehicle with respect to the vehicle 100.

As shown in Figs. 4 and 5, for example, a linear actuator is used as the curvature variable device 20. The curvature variable device 20 is constituted of a drive unit main body 71 and an operation shaft 72 movable with respect to the drive unit main body 71 so as to slide. In addition, a base end of the drive unit main body 71 is fixed to the curvature variable device bracket 65, and the operation shaft 72 slides along the forward and rearward directions. A distal end of the operation shaft 72 is connected to the connecting portion 61 of the mirror holder 16 so as to be able to be rotated.

Here, the curvature variable device bracket 65 is formed so that an attachment surface 65a to which the curvature variable device 20 is attached is offset forward from the surface on a side of the mirror 6 of the pivot plate 26. Therefore, in a state in which the operation shaft 72 of the curvature variable device 20 is extended, the distal end of the operation shaft 72 and the surface on the side of the mirror 6 of the pivot plate 26 are positioned on substantially the same plane.

### (Bending deformation operation of mirror 6)

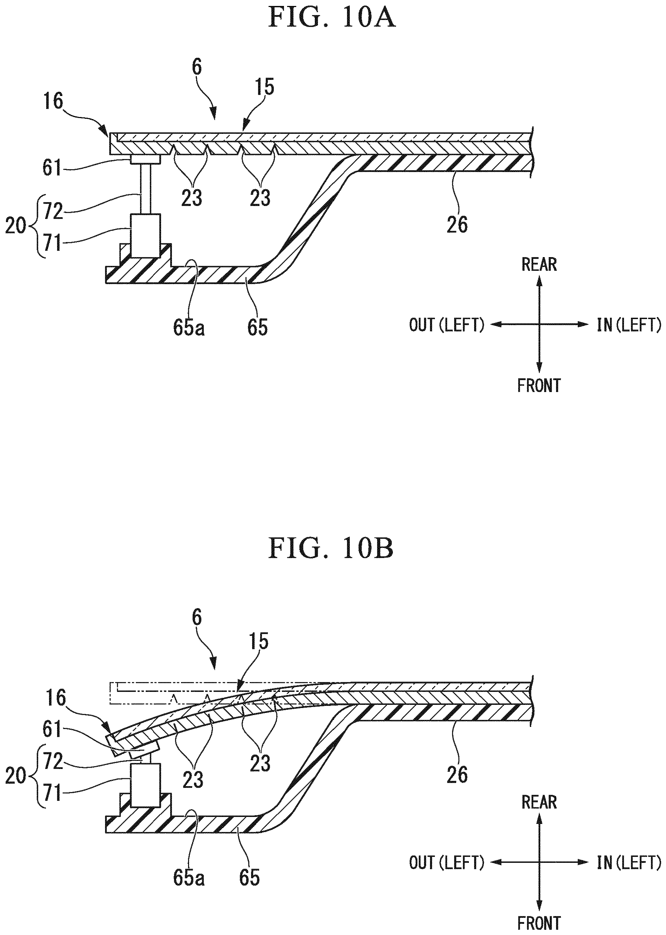

Next, the bending deformation operation of the mirror 6 will be described with reference to Figs. 10 to 12.

Fig. 10 is a diagram for explaining the bending deformation operation of the mirror 6. Fig. 10A shows a state of the mirror 6 in a case where the curvature variable device 20 does not change the radius of curvature of the mirror 6 and shows a state in which the mirror 6 is flat. Fig. 10B shows a state of the mirror 6 in a case where the curvature variable device 20 changes the radius of curvature of the mirror 6 and shows a state in which the mirror 6 is bent and deformed.

As shown in Fig. 10A, in a case where the curvature variable device 20 does not acquire the control instruction signal from the output unit 90 (normal state), the curvature variable device 20 does not change the radius of curvature of the mirror 6. Therefore, the operation shaft 72 of the curvature variable device 20 is extended, and the mirror 6 is entirely flat.

On the other hand, as shown in Fig. 10B, in a case where the curvature variable device 20 acquires the control instruction signal from the output unit 90 (wide angle state), the curvature variable device 20 changes the radius of curvature of the mirror 6. Therefore, the curvature variable device 20 retracts the operation shaft 72, and thus the vehicle width direction outer side of the mirror 6 is pulled toward the front. Here, the mirror main body 15 of the mirror 6 has flexibility. Furthermore, the mirror 6 is shaped to be supported on the pivot plate 26 at the center. Therefore, in a case where the vehicle width direction outer side of the mirror 6 is pulled, the vehicle width direction outer side is bent and deformed. At this time, since the plurality of grooves 23 along the vertical direction are formed on the vehicle width direction outer side of the mirror holder 16, the curvature variable device 20 is able to deform the mirror 6 into a bent shape with a small load.

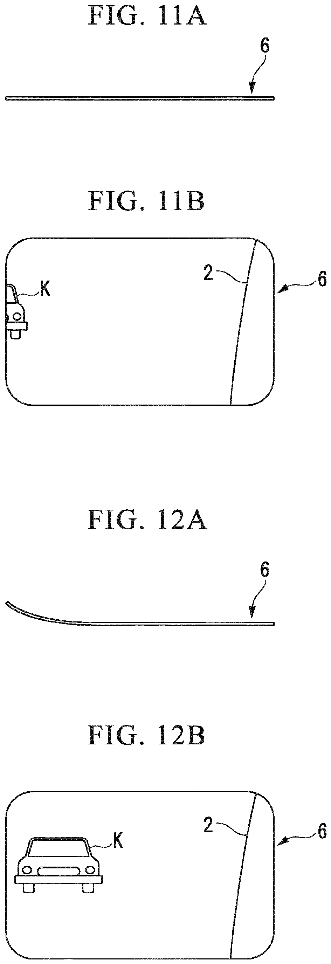

Fig. 11 is a diagram showing a case where the mirror 6 is flat. Fig. 11A shows a cross-sectional view of the mirror 6. Fig. 11B shows a mirror image reflected on the mirror 6 in the state of Fig. 11A.

In a case where the mirror 6 is flat as shown in Fig. 11A, for example, even in a case where a following vehicle K is traveling as shown in Fig. 11B, the entire following vehicle K is not reflected on the mirror 6, and it is difficult for the driver to recognize the following vehicle K. In addition to this, the driver is also difficult to determine whether the following vehicle K is a two-wheeled vehicle or a four-wheeled vehicle. This is because the following vehicle K has entered the range of the second angle that is the blind spot of the door mirror device 2.

Fig. 12 is a diagram showing a case where the vehicle width direction outer side of the mirror 6 is bent and deformed. Fig. 12A shows a cross-sectional view of the mirror 6. Fig. 12B shows the mirror image reflected on the mirror 6 in the state of Fig. 12A.

As shown in Fig. 12A, in a case where the curvature variable device 20 bends and deforms the vehicle width direction outer side of the mirror 6, as shown in Fig. 12B, a reflection angle of light on the vehicle width direction outer side of the mirror 6 changes, the entire following vehicle K traveling in the region of the second angle is reflected on the mirror 6. Therefore, as compared with a case where the entire mirror 6 is flat, the driver can easily recognize the following vehicle K.

Here, it is assumed that the curvature variable device 20 bends and deforms only the vehicle width direction outer side of the mirror 6 in bending and deforming the mirror 6. In this case, the mirror 6 remains flat between the substantially center of the mirror 6 in the vehicle width direction and the inner side in the vehicle width direction. Therefore, as compared with a case where the entire mirror 6 is bent and deformed, the mirror 6 is easily bent and deformed by the curvature variable device 20.

In addition to this, since the distance from the substantially center of the mirror 6 in the vehicle width direction to the inner side in the vehicle width direction is flat, the mirror image of the vehicle body 101 reflected on the inner side in the vehicle width direction of the mirror 6 is not distorted. Therefore, the driver can easily grasp a sense of distance from the vehicle body 101 to the following vehicle K.

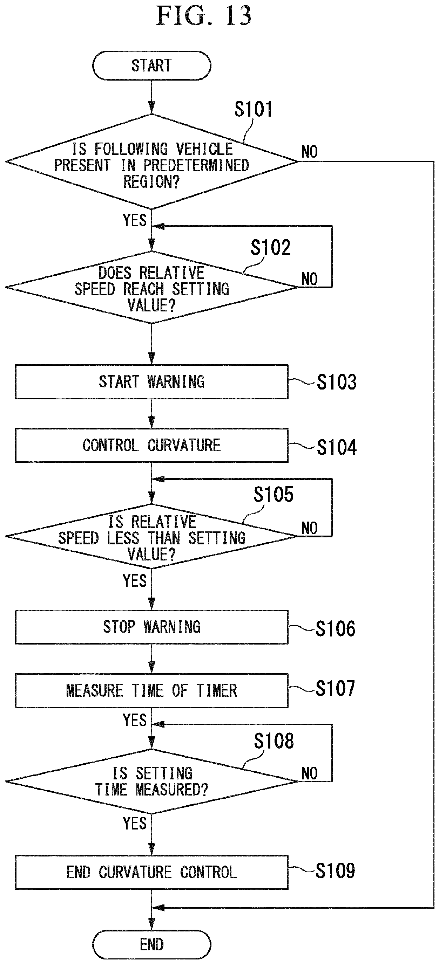

Hereinafter, a flow of a curvature control process of the vehicle system 1 will be described with reference to the drawings. Fig. 13 is a diagram for explaining a flow of a control method of the vehicle system 1.

In a case where on an ignition switch of the vehicle 100 is turned on by the driver, electric power is supplied from the battery mounted on the vehicle 100 to each part of the vehicle system 1.

The output unit 90 determines whether or not the following vehicle presence signal is acquired from the following vehicle detection unit 85. In a case where the output unit 90 determines that the following vehicle presence signal is acquired from the following vehicle detection unit 85, the output unit 90 determines that the following vehicle is in a predetermined region (step S101). Here, the predetermined region may be the region of the second angle, the region of the first angle, or both of the region of the second angle and the region of the first angle. In a case where the output unit 90 determines that the following vehicle presence signal is not acquired from the following vehicle detection unit 85, the output unit 90 ends the curvature control process.

The relative speed determination unit 80 determines whether or not the relative speed of the following vehicle with respect to the vehicle 100 has reached the set value (step SI02). In a case where the relative speed determination unit 80 determines that the relative speed of the following vehicle with respect to the vehicle 100 has reached the set value, the relative speed determination unit 80 outputs the speed excess signal to the output unit 90. In a case where the relative speed determination unit 80 determines that the relative speed of the following vehicle with respect to the vehicle 100 has not reached the set value, the relative speed determination unit 80 does not output the speed excess signal to the output unit 90.

In a case where the output unit 90 acquires the following vehicle presence signal from the following vehicle detection unit 85 and acquires the speed excess signal from the relative speed determination unit 80, the output unit 90 determines that the following vehicle has approached the vehicle 100. In addition, in a case where the output unit 90 determines that the following vehicle has approached the vehicle 100, the output unit 90 outputs the control instruction signal to the warning unit 92 and the curvature variable device 20. In a case where the control instruction signal is output, the warning unit 92 warns the driver that the following vehicle approaches the vehicle 100 (step S103).

In a case where curvature variable device 20 acquires the control instruction signal output from the output unit 90, the curvature variable device 20 implements the curvature control for changing the radius of curvature of the mirror 6 by bending and deforming the mirror 6 (step S104). For example, in a case where the control instruction signal is output, the curvature variable device 20 changes the radius of curvature of the region outside the center of the vehicle 100 in the vehicle width direction to a predetermined value in the mirror 6.

The relative speed determination unit 80 determines whether or not the relative speed of the following vehicle with respect to the vehicle 100 is less than the set value (step SI05). In a case where the relative speed determination unit 80 determines that the relative speed of the following vehicle with respect to the vehicle 100 is less than the set value, the relative speed determination unit 80 stops the output of the speed excess signal. On the other hand, in a case where the relative speed determination unit 80 determines that the relative speed of the following vehicle with respect to the vehicle 100 has reached the set value, the relative speed determination unit 80 continues to output the speed excess signal.

In a case where the speed excess signal disappears from the relative speed determination unit 80, the output unit 90 stops the output of the control instruction signal. In a case where the output of the control instruction signal is stopped, the warning unit 92 stops the warning to the driver (step S106).

In a case where the speed excess signal from the relative speed determination unit 80 disappears, the timer 91 starts the time measurement (step S107). In a case where the timer 91 measures the set time, the timer 91 outputs the time measurement end signal indicating that the time measurement of the set time is ended to the curvature variable device 20 (step S108).

In a case where the curvature variable device 20 acquires the time measurement end signal from the timer 91, the curvature variable device 20 returns the radius of curvature of the mirror 6 to the original (step S109).

As described above, the vehicle system 1 according to the present embodiment includes the mirror 6, the output unit 90, and the curvature variable device 20. The mirror 6 is provided in the vehicle 100 (subject vehicle) and has flexibility. In a case where at least one of the approach of the following vehicle with respect to the vehicle 100 and the execution of the lane change of the vehicle 100 is detected, the output unit 90 outputs the control instruction signal. In a case where the control instruction signal is output, the curvature variable device 20 changes the radius of curvature of the mirror 6. Therefore, the vehicle system 1 is able to direct a part of the mirror 6 to the outside. Therefore, the vehicle system 1 is able to reflect the blind spot without directing the entire mirror 6 to the outside of the vehicle. That is, in a case where the following vehicle approaches the subject vehicle, the mirror 6 is also able to reflect the region of the blind spot while reflecting a side surface of the vehicle. Therefore, the driver can grasp the position of the following vehicle with respect to the subject vehicle that is traveling, and can perform operation such as a lane change safely.

In addition, in the above-described embodiment, the curvature variable device 20 may change the radius of curvature of the mirror 6 variable according to the relative speed of the following vehicle with respect to the vehicle 100.

In addition, in the above-described embodiment, in a case where when the control instruction signal is output, the curvature variable device 20 may change the radius of curvature of the mirror 6 to a predetermined value, and the curvature variable device 20 may adjust the speed that changes the radius of curvature of the mirror to the predetermined value according to the relative speed of the following vehicle with respect to the vehicle 100.

In addition, in the above-described embodiment, in a case where the control instruction signal is output from the output unit 90, the timer 91 starts the time measurement, and in a case where the set time is measured, the timer 91 outputs the time measurement end signal indicating that the time measurement of the set time is ended to the curvature variable device 20. In this case, after the timer 91 measures the set time, in a case where the control instruction signal is not output from the output unit 90, the curvature variable device 20 returns the radius of curvature of the mirror 6 to the original. That is, after the curvature variable device 20 acquires the time measurement end signal from the timer 91, in a case where the control instruction signal is not output from the output unit 90, the curvature variable device 20 returns the radius of curvature of the mirror 6 to the original.

In addition, in the above-described embodiment, the vehicle system 1 may include, for example, a switch, in the vehicle 100, for prohibiting the curvature control of the curvature variable device 20. Therefore, even in a case where the curvature variable device 20 acquires the control instruction signal from the output unit 90, the curvature variable device 20 does not perform the curvature control of the curvature variable device 20 in a case where the switch is turned on. Therefore, in a case where the curvature control on the mirror 6 is unnecessary, the driver can prohibit the curvature control by operating the switch.

In addition, in the above-described embodiment, the vehicle system 1 may perform curvature control by the curvature variable device 20 and tilt the mirror 6 by the drive unit 7. That is, the vehicle system 1 may tilt the mirror 6 by the drive unit 7 during the curvature control by the curvature variable device 20 in order to make the following vehicle more visible.

In addition, in a case where the curvature variable device 20 returns the radius of curvature of the mirror 6 to the original, the curvature variable device 20 may have a function of bouncing water droplets adhering to the surface of the mirror 6 (the surface 17b of the tempered glass 17). Therefore, for example, even in a case of traveling in a rainy weather, it is possible to keep a field of view of the mirror 6 satisfactory.

In addition, in the above-described embodiment, the vehicle system 1 prevents the chattering by the following vehicles of a chained state by the timer 91, but the present invention is not limited thereto. For example, the vehicle system 1 may detect the following vehicles of a chained state from the vehicle 100 or a camera installed around the vehicle 100 to prevent the chattering of the curvature control. In addition, the vehicle system 1 may detect the following vehicles of a chained state by inter-vehicle communication with the following vehicle to prevent the chattering of the curvature control.

### (First modified example)

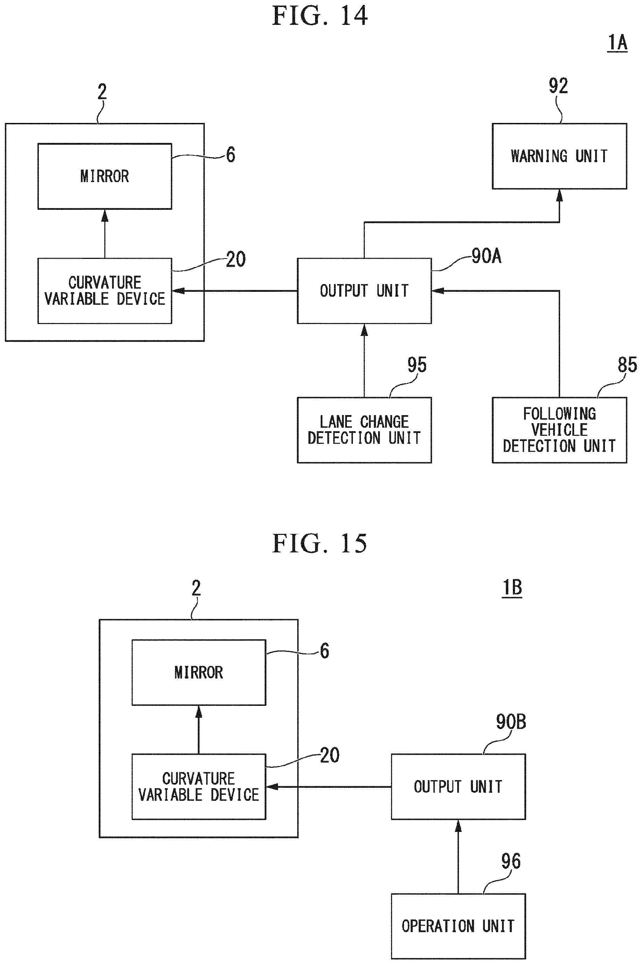

Hereinafter, a first modified example of the vehicle system 1 according to the present embodiment will be described with reference to the drawings. Fig. 14 is a diagram showing a first modified example of the vehicle system 1 according to the present embodiment. In a case where a vehicle system 1A of the first modified example in the present embodiment detects execution of a lane change of the subject vehicle, the vehicle system 1A implements the curvature control of the mirror 6. Note that the execution of the lane change of the subject vehicle may be a case where the subject vehicle is executing the lane change or a case where the subject vehicle tries to execute the lane change.

The vehicle system 1A includes the door mirror device 2, the following vehicle detection unit 85, an output unit 90A, the warning unit 92, and a lane change detection unit 95.

The lane change detection unit 95 determines whether or not the vehicle 100 changes the lane. For example, the lane change detection unit 95 determines whether or not the steering of the vehicle 100 has rotated more than a predetermined angle. In a case where the steering of the vehicle 100 rotates more than the predetermined angle, the lane change detection unit 95 outputs a lane change signal indicating execution of the lane change of the vehicle 100 to the output unit 90A.

For example, the lane change detection unit 95 determines whether or not the direction indicator of the vehicle 100 is operated. In a case where the direction indicator of the vehicle 100 is operated, the lane change detection unit 95 may output the lane change signal indicating the execution of the lane change of the vehicle 100 to the output unit 90A.

In a case where the following vehicle is detected by the following vehicle detection unit 85 and the steering of the vehicle 100 is rotated more than the predetermined angle, the output unit 90A outputs the control instruction signal to the curvature variable device 20. Alternatively, in a case where the following vehicle is detected by the following vehicle detection unit 85 and the direction indicator of the vehicle 100 is operated, the output unit 90A outputs the control instruction signal to the curvature variable device 20.

That is, in a case where the output unit 90A acquires the following vehicle presence signal from the following vehicle detection unit 85 and also acquires the lane change signal from the lane change detection unit 95, the output unit 90A outputs the control instruction signal to the curvature variable device 20.

### (Second modified example)

Hereinafter, a second modified example of the vehicle system 1 according to the present embodiment will be described with reference to the drawings. Fig. 15 is a diagram showing a second modified example of the vehicle system 1 according to the present embodiment. A vehicle system 1B according to the second modified example of the present embodiment is provided with an operation unit 96 instructing to control the curvature of the mirror 6.

The vehicle system 1B includes the door mirror device 2, an output unit 90B, and the operation unit 96.

The operation unit 96 is, for example, a switch that is operated by the driver in a case where the curvature of the mirror 6 is controlled. In a case where the operation unit 96 is operated by the driver, the operation unit 96 outputs an operation signal indicating that the operation unit 96 is operated to the output unit 90B. The case where the curvature of the mirror 6 is controlled may be a case where the driver checks the rear side in a case where the vehicle 100 changes the lane, or a case where the driver checks the rear side in a case where the vehicle 100 stops due to a traffic jam or the like.

In a case where the operation signal is output from the operation unit 96, the output unit 90B outputs the control instruction signal to the curvature variable device 20.

Therefore, the driver can control the curvature of the mirror 6 at a desired timing by operating the operation unit 96.

Note that each unit of the vehicle systems 1 to 1B may be realized by hardware, may be realized by software, or may be realized by a combination of hardware and software.

Each of the output units 90, 90A, and 90B in the above-described embodiment may be realized by a computer. In this case, each of the output units 90, 90A, and 90B may be realized by recording a program for realizing this function in a computer readable recording medium, causing a computer system to read and execute the program recorded in the recording medium. Note that the "computer system" referred to here includes an OS or hardware such as a peripheral device. In addition, the "computer-readable recording medium" refers to a storage medium such as a flexible disk, a magneto-optical disk, a ROM, a portable medium such as a CD-ROM, and a hard disk built in the computer system. Furthermore, the "computer-readable recording medium" may include a recording medium that dynamically holds a program for a short time, such as a communication line of a case transmitting the program through a network such as the Internet or a communication line such as a telephone line, and a recording medium that holds the program for a certain time, such as a volatile memory inside the computer system serving as a server or a client in that case. In addition, the program may be a program for realizing a part of the above-described function, or may be a program that is able to realize the above-described function by combining with a program already recorded in the computer system, or may be a program realized by using a programmable logic device such as a field programmable gate array (FPGA).

It should be noted that sequences of executions of each process, such as operation, procedure, step, stage, and the like in the device, the system, the program, and the method shown in the claims, the description, and the drawings are not particularly clearly indicated as "before", "prior", and the like, and the sequences of executions are able to be realized in an arbitrary order as long as an output of a previous process is not used in a subsequent process. Regarding the operation flow in the claims, the description, and the drawings, even though the operation flow is described using "first," "next," and the like for the sake of convenience, it does not mean that it is essential to implement the operation flows in this order.

### [Industrial Applicability]

According to the above-described vehicle system, it is possible to grasp the position of the following vehicle with respect to the subject vehicle while securing the visibility to the rear and of the following vehicle.

### DESCRIPTION OF THE REFERENCE SYMBOLS

1 Vehicle system
2 Door mirror device
6 Mirror
20 Curvature variable device
80 Relative speed determination unit
85 Following vehicle detection unit
90 Output unit
91 Timer
92 Warning unit
95 Lane change detection unit

## Claims

1. A vehicle system comprising:
a mirror (6) having flexibility and provided in a subject vehicle;
an output unit (90) configured to output a control instruction signal instructing to control the mirror (6) in a case where approach of a following vehicle with respect to the subject vehicle is detected; and
a curvature variable device (20) configured to change a radius of curvature of the mirror in a case where the control instruction signal is output,
**characterized in that**, in a case where the control instruction signal is output, the curvature variable device (20) changes the radius of curvature of the mirror to a predetermined value and adjusts a speed at which the radius of curvature of the mirror (6) is changed to the predetermined value in accordance with a relative speed of the following vehicle with respect to the subject vehicle.

2. The vehicle system according to claim 1,
wherein, in a case where the control instruction signal is output, the curvature variable device (20) changes the radius of curvature of a region outside a vehicle width direction center of the subject vehicle in the mirror (6).

3. The vehicle system according to claim 1 or 2, further comprising:
a following vehicle detection unit (85) configured to detect the following vehicle that is present at a rear side position of the subject vehicle; and
a relative speed determination unit (80) configured to determine whether or not a relative speed of the following vehicle with respect to the subject vehicle is equal to or greater than a speed threshold value,
wherein, in a case where the following vehicle is detected and the relative speed is equal to or higher than the speed threshold value, the output unit (90) outputs the control instruction signal.

4. The vehicle system according to any one of claims 1 to 3,
wherein, in a case where the following vehicle is detected and a steering of the subject vehicle is rotated at a predetermined angle or more, the output unit (90) outputs the control instruction signal.

5. The vehicle system according to any one of claims 1 to 4,
wherein, in a case where the following vehicle is detected and a direction indicator of the subject vehicle is operated, the output unit (90) outputs the control instruction signal.

6. The vehicle system according to any one of claims 1 to 5, further comprising:
a timer (91) configured to start time measurement in a case where the output of the control instruction signal from the output unit (90) is stopped,
wherein the curvature variable device (20) returns the radius of curvature of the mirror to an original radius of curvature of the mirror after the timer measures a set time.

7. The vehicle system according to any one of claims 1 to 5, further comprising:
a timer (91) configured to start time measurement in a case where the control instruction signal is output from the output unit (90),
wherein, in a case where the control instruction signal is not output after the timer (91) measures a set time, the curvature variable device (20) returns the radius of curvature of the mirror to an original radius of curvature of the mirror.

## Patentansprüche

1. Ein Fahrzeugsystem, das umfasst:
einen Spiegel (6), der flexibel ist und in einem gegenständlichen Fahrzeug bereitgestellt wird,
eine Ausgabeeinheit (90), konfiguriert zur Ausgabe eines Steuerbefehlssignals, das die Anweisung erteilt, den Spiegel (6) zu verstellen, wenn die Annäherung eines nachfolgenden Fahrzeugs an das gegenständliche Fahrzeug erkannt wird; und
eine Vorrichtung zur Veränderung der Krümmung (20), konfiguriert zur Änderung eines Krümmungsradius des Spiegels in dem Fall, dass das Steuerbefehlssignal ausgegeben wird,
**dadurch gekennzeichnet, dass**
in dem Fall, dass das Steuerbefehlssignal ausgegeben wird, die Vorrichtung zur Veränderung der Krümmung (20) den Krümmungsradius des Spiegels zu einem vorher festgelegten Wert ändert und die Geschwindigkeit anpasst, in der der Krümmungsradius des Spiegels (6) zu dem vorher festgelegten Wert verändert wird, in Übereinstimmung mit einer relativen Geschwindigkeit des nachfolgenden Fahrzeugs, bezogen auf das gegenständliche Fahrzeug.

2. Das Fahrzeugsystem nach Anspruch 1,
wobei in dem Fall, dass ein Steuerbefehlssignal ausgegeben wird, die Vorrichtung zur Veränderung der Krümmung (20) den Krümmungsradius einer Region außerhalb des Zentrums der Fahrzeugbreitenrichtung des gegenständlichen Fahrzeugs im Spiegel (6) ändert.

3. Fahrzeugsystem nach Anspruch I oder 2, das außerdem enthält:
eine Folgefahrzeug- Erkennungseinheit (85), konfiguriert zur Erkennung des folgenden Fahrzeugs, das sich in einer hinteren, seitlichen Position zum gegenständlichen Fahrzeug befindet; und
eine relative Geschwindigkeitsbestimmungseinheit (80), konfiguriert um zu bestimmen, ob die relative Geschwindigkeit des folgenden Fahrzeugs, bezogen auf das gegenständliche Fahrzeug gleich oder größer ist, als eine Geschwindigkeits-Schwellenwert,
wobei in dem Fall, dass das folgende Fahrzeug erkannt wird und die relative Geschwindigkeit gleich oder größer als der Geschwindigkeits- Schwellenwert ist, die Ausgabeeinheit (90) das Steuerbefehlssignal ausgibt.

4. Das Fahrzeugsystem nach irgendeinem der Ansprüche 1 bis 3,
wobei in dem Fall, dass das folgende Fahrzeug erkannt wird und eine Steuerung des gegenständlichen Fahrzeugs in einem vorher festgelegten Winkel oder darüber hinaus gedreht wird, die Ausgabeeinheit (90) das Steuerbefehlssignal ausgibt.

5. Das Fahrzeugsystem nach irgendeinem der Ansprüche 1 bis 4,
wobei für den Fall, dass das folgende Fahrzeug erkannt wird und ein Richtungsanzeiger des gegenständlichen Fahrzeugs betätigt wird, die Ausgabeeinheit (90) das Steuerbefehlssignal ausgibt.

6. Fahrzeugsystem nach irgendeinem der Ansprüche 1 oder 5, das außerdem enthält:
einen Timer (91), konfiguriert zum Beginn der Zeitmessung für den Fall, dass die Ausgabe des Steuerbefehlssignals von der Ausgabeeinheit (90) gestoppt wird,
wobei die Vorrichtung zur Veränderung der Krümmung (20) den Krümmungsradius des Spiegels in den ursprünglichen Krümmungsradius des Spiegels zurückstellt, nachdem der Timer eine bestimmte Zeit gemessen hat.

7. Fahrzeugsystem nach irgendeinem der Ansprüche 1 bis 5, weiterhin umfassend:
einen Timer (91), konfiguriert mit der Zeitmessung zu beginnen, wenn das Steuerbefehlssignal von der Ausgabeeinheit (90), ausgegeben wird,
wobei für den Fall, dass das Steuerbefehlssignal nicht ausgegeben wird, nachdem der Timer (91) eine bestimmte Zeit gemessen hat, die Vorrichtung zur Veränderung der Krümmung (20) den Krümmungsradius des Spiegels in den ursprünglichen Krümmungsradius des Spiegels zurückstellt,

## Revendications

1. Système de véhicule, comprenant :
un rétroviseur (6) qui présente de la flexibilité et qui est monté sur un véhicule sujet ;
une unité de sortie (90) qui est configurée de manière à émettre un signal d'instruction de commande qui communique des instructions pour commander le rétroviseur (6) dans un cas dans lequel le rapprochement d'un véhicule qui suit par rapport au véhicule sujet est détectée ; et
un dispositif de variation de courbure (20) qui est configuré de manière à modifier un rayon de courbure du rétroviseur dans un cas dans lequel le signal d'instruction de commande est émis,
**caractérisé en ce que**, dans un cas dans lequel le signal d'instruction de commande est émis, le dispositif de variation de courbure (20) modifie le rayon de courbure du rétroviseur à une valeur prédéterminée et règle une vitesse à laquelle le rayon de courbure du rétroviseur (6) est modifié à la valeur prédéterminée conformément à une vitesse relative du véhicule qui suit par rapport au véhicule sujet.

2. Système de véhicule selon la revendication 1, dans lequel, dans un cas dans lequel le signal d'instruction de commande est émis, le dispositif de variation de courbure (20) modifie le rayon de courbure d'une région qui est située à l'extérieur d'un centre dans le sens de la largeur de véhicule du véhicule sujet dans le rétroviseur (6).

3. Système de véhicule selon la revendication 1 ou 2, comprenant en outre :
une unité de détection de véhicule qui suit (85) qui est configurée de manière à détecter le véhicule qui suit qui est présent au niveau d'une position de côté arrière du véhicule sujet ; et
une unité de détermination de vitesse relative (80) qui est configurée de manière à déterminer si une vitesse relative du véhicule qui suit par rapport au véhicule sujet est ou n'est pas égale ou supérieure à une valeur de seuil de vitesse,
dans lequel, dans un cas dans lequel la présence du véhicule qui suit est détectée et où la vitesse relative est égale ou supérieure à la valeur de seuil de vitesse, l'unité de sortie (90) émet le signal d'instruction de commande.

4. Système de véhicule selon l'une quelconque des revendications 1 à 3, dans lequel, dans un cas dans lequel la présence du véhicule qui suit est détectée et où une direction du véhicule sujet est tournée suivant un angle prédéterminé, ou plus grand, l'unité de sortie (90) émet le signal d'instruction de commande.

5. Système de véhicule selon l'une quelconque des revendications 1 à 4, dans lequel, dans un cas dans lequel la présence du véhicule qui suit est détectée et où un indicateur de direction du véhicule sujet est actionné, l'unité de sortie (90) émet le signal d'instruction de commande.

6. Système de véhicule selon l'une quelconque des revendications 1 à 5, comprenant en outre :
un minuteur (91) qui est configuré de manière à démarrer une mesure de temps dans un cas dans lequel l'émission du signal d'instruction de commande en provenance de l'unité de sortie (90) est arrêtée,
dans lequel le dispositif de variation de courbure (20) replace le rayon de courbure du rétroviseur au niveau d'un rayon de courbure original du rétroviseur après que le minuteur a mesuré un temps défini.

7. Système de véhicule selon l'une quelconque des revendications 1 à 5, comprenant en outre :
un minuteur (91) qui est configuré de manière à démarrer une mesure de temps dans un cas dans lequel le signal d'instruction de commande est émis à partir de l'unité de sortie (90),
dans lequel, dans un cas dans lequel le signal d'instruction de commande n'est pas émis après que le minuteur (91) a mesuré un temps défini, le dispositif de variation de courbure (20) replace le rayon de courbure du rétroviseur au niveau d'un rayon de courbure original du rétroviseur.
